# EUROPEAN PATENT SPECIFICATION

(11) **EP 2 517 770 B1**
(45) Date of publication and mention of the grant of the patent: **23.11.2016**
(21) Application number: 12163680.7
(22) Date of filing: 11.04.2012
(51) Int. Cl.: B01D 33/23

(54) **Fastening element**
Befestigungselement
Élément de fixation

(30) Priority: 29.04.2011 FI 20115409
(43) Date of publication of application: 31.10.2012
(73) Proprietor: Valmet Technologies, Inc., 02150 Espoo (FI)
(72) Inventor: Väätänen, Risto, 04430 Järvenpää (FI); Buller, Jyrki, 00560 Helsinki (FI); Hiljanen, Antti, 33960 Pirkkala (FI); Hyytiäinen, Harri, 33720 Tampere (FI); Kopra, Ari, 37630 Valkeakoski (FI); Riivari, Petteri, 49540 Metsäkylä (FI)
(74) Representative: Kolster Oy Ab

(56) References cited:
- WO-A1-2009/040482
- GB-A- 659 444

## Description

### Background of the invention

The invention relates to disc filters and, in particular, to a filter sector with a fastening element for fastening said filter sector of a filter disc in a disc filter to a support sleeve in a shaft of the disc filter.

Disc filters are commonly used for fibre recovery and water purification in a white water system of paper and board machines. Disc filters comprise a rotatable shaft and, longitudinally thereto, a plurality of consecutively placed discoid filters, i.e. filter discs. Circumferentially to the shaft, the filter discs consist of filter sectors which are fastened side by side to the shaft and which are sector-shaped filter structures separate from one another and surrounded by support edges.

In general, fibrous pulp is conveyed to disc filters in such a manner that fibrous pulp, i.e. pulp suspension, is fed through a feed tray into a vat in the lower part of the disc filter. When the disc filter is in operation, the pulp suspension is subjected to suction pressure, or suction effect, through filter sectors of a filter disc which are located below the surface of the pulp suspension, as a result of which a fibre layer is provided on a wire coating constituting the surface of the disc filter within the areas defined by the support edges of the filter sectors. As a result of the same suction effect, water contained in the pulp suspension is filtered through the fibre layer deposited on the surface of the filter disc as a filtrate inside the filter sectors. Said fibre layer acts thus as a filter which removes particles from water flowing through the fibre layer in question. The filtrate that has entered the filter sectors is forwarded to a filtrate channel located inside the disc filter shaft and corresponding to each filter sector, and further out of the disc filter.

The fibre layer, i.e. flocculated pulp, formed on the surface of the filter disc is removed when the filter disc has revolved above the surface of the fibre pulp suspension in the disc filter vat. This is generally performed in such a manner that the suction pressure is discontinued, whereby the fibre layer can detach from the filter disc by the effect of gravity alone. In general, detachment of the fibre layer is enhanced, however, by means of water jets directed thereto. The detachment of the fibre layer may also be enhanced by providing, inside the filter sector, a higher pressure than the atmospheric pressure via a filtrate channel corresponding to each filter sector. The fibre layer detached from the filter disc falls into chutes between the filter discs, at the bottom of which chutes there is typically a screw conveyor for removing the flocculated pulp from the disc filter. US publications 4,136,028 and 5,792,352 disclose some disc filters.

A known disc filter shaft comprises support sleeves in connection with which the filter sectors of the filter disc can be fastened. Each individual support sleeve forms both a feed conduit for conveying the filtrate having arrived within the filter sector corresponding to the support sleeve into the corresponding filtrate channel inside the shaft and a support structure for fastening the filter sector to the disc filter shaft. The filter sector is fastened to the end of the support sleeve by welding. However, weld fastening makes maintenance of the filter discs more difficult because, for instance, the replaceability of filter sectors is laborious and frequently requires hot work operation which may damage wire coatings of filter sectors. Further, the welded joint may convey the forces present in cases of damage directly to the disc filter shaft, in which case the shaft construction may get damaged.
Documents WO 2009/040482 and GB 659 444 describe each a disc filter with a plurality of filter sectors and fastening elements for fastening said filter sectors to said disc filter.

### Brief description of the invention

It is an object of the present invention to provide a novel and improved solution for fastening a filter sector of a filter disc in a disc filter to a shaft of the disc filter.

The filter sector according to the invention is characterized in that the fastening element comprises a clamp element and a support bar arranged in connection with the clamp element, whereby the support bar is arranged to be fastened to the filter sector of the filter disc, and the clamp element is arranged to be fastened to the support sleeve in the disc filter shaft to fasten the filter sector of the filter disc to the disc filter shaft.

The fastening element via which the filter sector of the filter disc in the disc filter is fastened to the support sleeve in the disc filter shaft comprises a clamp element and a support bar arranged in connection with the clamp element, whereby the support bar is arranged to be fastened to the filter sector of the filter disc, and the clamp element is arranged to be fastened to the support sleeve in the disc filter shaft to fasten the filter sector of the filter disc to the disc filter shaft.

Owing to the clamp element to be fastened to the support sleeve of the disc filter shaft and the support bar to be fastened to the filter sector of the filter disc, the filter sector can be fastened to the disc filter shaft more firmly than in prior art weld fastening, but still flexibly, so that the support bar gives support to the filter sector in the circumferential direction of the disc filter shaft but may, at the same time, bend to some extent in the circumferential direction of the shaft due to the effect of the forces the filter sector is subjected to, without there being a risk that the fastening of the filter sector to the support sleeve would break.

Some different embodiments of the filter sector. are disclosed in the dependent claims.

### Brief description of figures

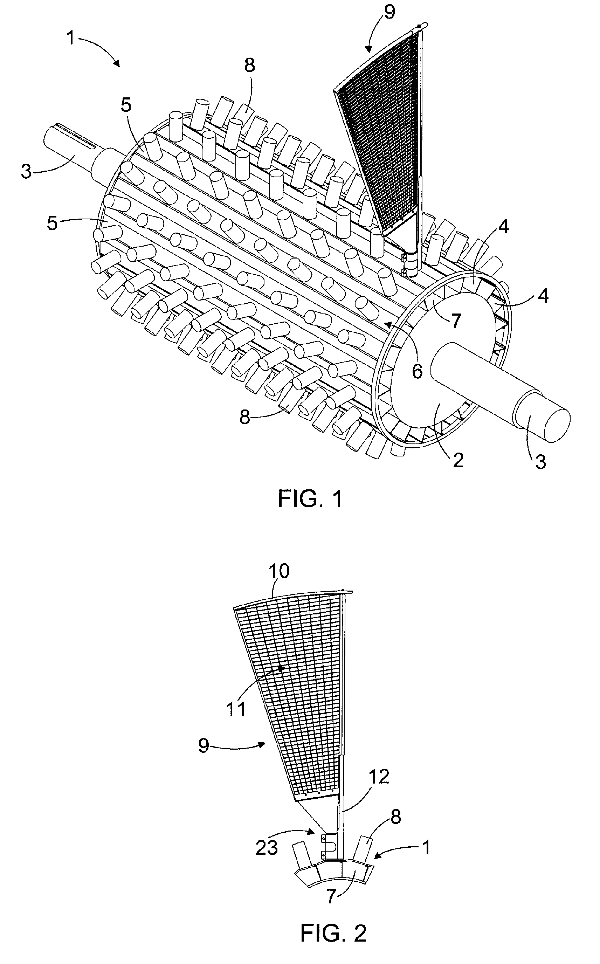

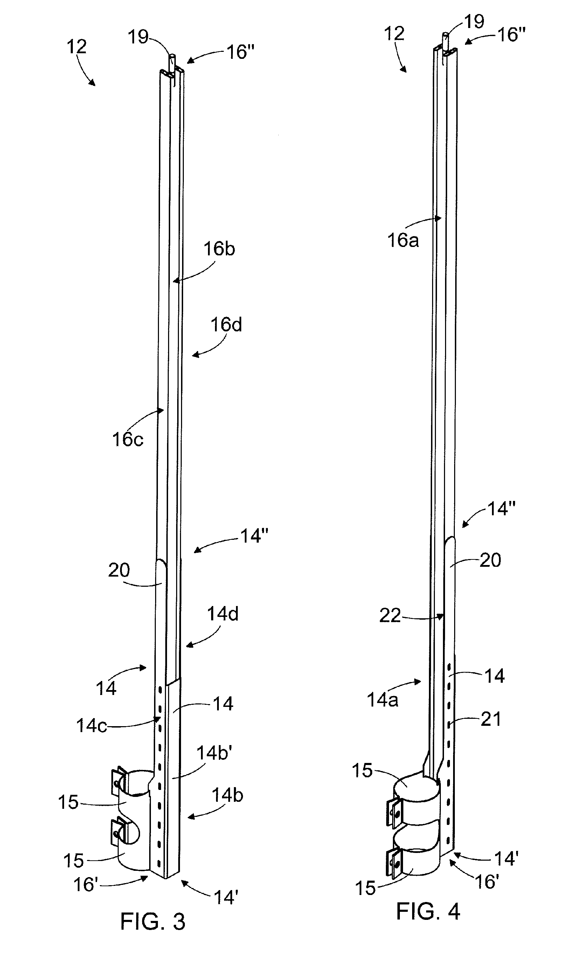

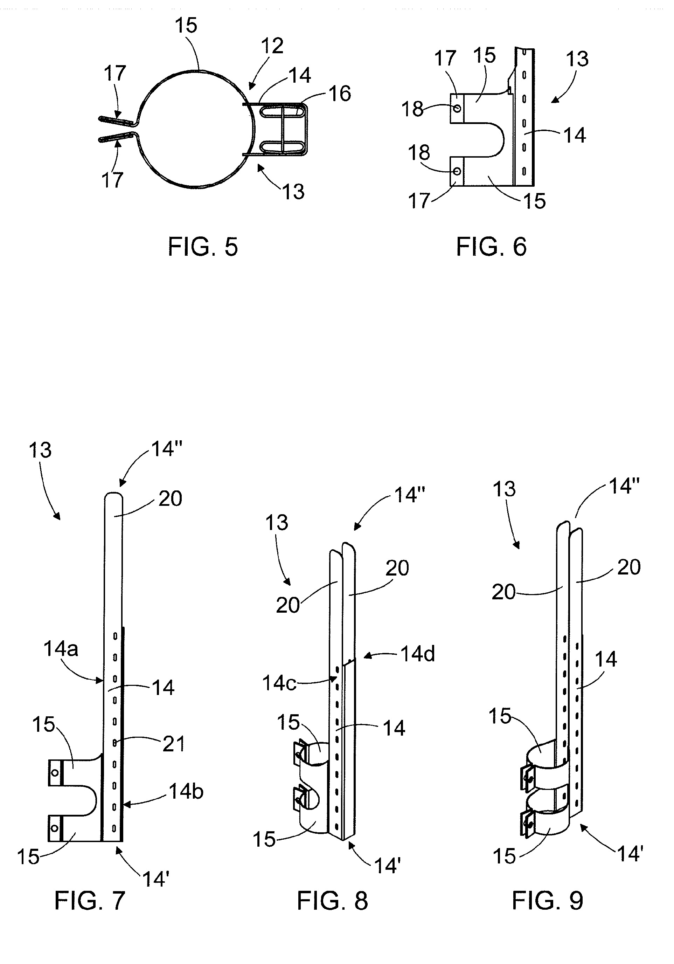

Some embodiments of the invention will be explained in greater detail in the attached drawings, in which Figure 1 is a schematic view of a disc filter shaft; Figure 2 is a schematic view of a filter sector of a filter disc in a disc filter; Figure 3 is a schematic view of a fastening element, seen obliquely from the rear; Figure 4 is a schematic view of the fastening element of Figure 3, seen obliquely from the front; Figure 5 is a top schematic view of the fastening element of Figure 3; Figure 6 is a schematic view of a detail of the fastening element of Figure 3; Figure 7 is a schematic side view of a clamp element; Figure 8 is a schematic view of the clamp element of Figure 7, seen obliquely from the rear; and Figure 9 is a schematic view of the clamp element of Figure 7, seen obliquely from the front.

In the figures, some embodiments of the invention are shown simplified for the sake of clarity. Like reference numerals refer to like parts in the figures.

### Detailed description of the invention

Figure 1 shows schematically a disc filter shaft 1, which hereinafter may also be merely referred to as the shaft 1. The disc filter shaft 1 includes a central shaft 2 constituting the body of the shaft 1, and journals 3 through which the shaft 1 is rotatably supported to disc filter bearing blocks, not shown in Figure 1 for the sake of clarity. The shaft 1 further includes sector plates 4 arranged circumferentially to the shaft 1, side by side, with a mutual spacing. The sector plates 4 are plate-like structural elements in the longitudinal direction of the shaft 1, attached to the central shaft 2, directed outwardly from the central shaft 2 and extending substantially throughout the entire length of the central shaft 2. At the end of the sector plates 4 directed outwardly from the central shaft 2, casing parts 5 are fastened circumferentially to the shaft, side by side and parallel with the longitudinal direction of the shaft 1, which casing parts together constitute a casing 6 for the shaft 1. The casing 6 of the shaft 1, the sector plates 4 and the central shaft 2 define within the shaft 1 axial channels 7, or filtrate channels 7, which are in the longitudinal direction of the shaft 1 and separated from one another circumferentially to the shaft 1. Further, the shaft 1 comprises support sleeves 8 secured to the casing 6 of the shaft 1, arranged consecutively in the longitudinal direction of the shaft 1 and adjacently in the circumferential direction of the shaft 1. Each support sleeve 8 provides an attachment point for an individual filter sector 9 of a filter disc in the disc filter, and a flow connection for conducting the pulp suspension filtered through the filter sector 9 into the filtrate channel 7 at the location of the support sleeve 8.

Figure 2 is a schematic view of a filter sector 9 of a filter disc in a disc filter. The filter sector 9 has a support edge 10, and within the area defined by this edge, a wire coating 11 is arranged which forms the filter surface or filter base of the filter sector 9, upon which a fibre layer is formed within the area defined by the support edge 10. During the operation of the disc filter, water contained in the pulp suspension is filtered through the fibre layer as a filtrate inside the filter sector 9. The filtrate that has entered the filter sector 9 is forwarded into the filtrate channel 7 located inside the disc filter shaft 1 through a sector sleeve 23 of the filter sector 9 and the support sleeve 8 corresponding thereto, and further out of the disc filter.

Figures 1 and 2 also show a fastening arrangement for fastening the filter sector 9 to the disc filter shaft 1. The fastening arrangement comprises a fastening element 12, whereby the filter sector 9 is fastened to the fastening element 12 by the support edge 10. The fastening element 12, in turn, is fastened to the support sleeve 8, whereby the filter sector 9 becomes attached to the disc filter shaft 1 through the fastening element 12. Figures 3 to 9 show the structure of the fastening element 12 in greater detail.

Figure 3 shows a schematic view of a fastening element 12 obliquely from the rear, Figure 4 shows a schematic view of the fastening element 12 of Figure 3 obliquely from the front, Figure 5 shows a schematic top view of the fastening element 12 of Figure 3, and Figure 6 shows a schematic side view of a detail of the fastening element 12 of Figure 3.

The fastening element 12 of Figures 3 to 6 comprises a clamp element 13 that comprises a support element 14 and two fastening clamps 15 fastened to the support element 14. Further, the fastening element 12 comprises a support bar 16 fastened to the support element 14, in connection with which support bar the filter sector 9 can be fastened to fasten the filter sector 9 through the fastening element 12 to the support sleeve 8 of the disc filter shaft 1 in the manner becoming apparent from Figures 1 and 2.

When the filter sector 9 is fastened to the disc filter shaft 1 and, more precisely, to the support sleeve 8 of the disc filter shaft 1, the sector sleeve 23 of the filter sector 9 is positioned inside the support sleeve 8, and the filter sector 9 is fastened by its support edge 10 to the support bar 16 of the fastening element 12, after which the fastening element 12 is fastened to the support sleeve 8 through fastening clamps 15. The fastening element 12 may also be fastened to the support sleeve 8 before the filter sector 9 is fastened to the support bar 16. Sealing between the sector sleeve 23 of the filter sector 9 and the support sleeve 8 can be provided by, for example, arranging O-ring sealing between the sector sleeve 23 and the support sleeve 8. The task of the support bar 16 is to support the filter sector 9 to the shaft 1 through the clamp element 13. The support effect of the support bar 16 is transferred to the filter sector 9 from one edge thereof in the direction of the disc filter shaft 1 and in at least one circumferential direction of the disc filter shaft 1.

In Figures 1 and 2, one fastening element 12 is used for fastening one filter sector 9 to the shaft 1. It is feasible, however, to use one fastening element 12 in a circumferential direction of the shaft 1 for fastening two adjacent filter sectors 9 to the shaft 1 in such a way that the filter sectors 9 become fastened to the same support sleeve 8 through the fastening element 12.

In the embodiment of Figures 3 to 6, the support element 14 is an open or hollow and elongated profile structure defining an area with a substantially square-shaped cross-section and comprising an open front side 14a, a rear side 14b or backside 14b arranged on the side opposite to the front side 14a and closed over at least part of the total length of the support element 14, as well as side surfaces 14c, 14d or sides 14c, 14d between the front side 14a and backside 14b.

The support element 14 further comprises a first end 14' and second end 14", which first end 14' is directed towards the disc filter shaft 1 or the support sleeve 8 and which second end 14" is directed away from the shaft 1 when the fastening element 12 is fastened to the disc filter shaft 1.

The fastening clamps 15 are arranged in the support element 14 at the first end 14' thereof on the side of the front side 14a in the support element 14 in such a way that one fastening clamp 15 is quite at the first end 14' of the support element 14 while the second fastening clamp 15 is in the longitudinal direction of the support element 14 at a distance from the first end 14' of the support element 14 towards the second end 14" thereof. The fastening clamp 15 is formed of a plate structure bent into a substantially annular shape, at both ends of which structure there are plane surfaces 17 having holes 18 in which fastening bolts may be arranged, whereby the fastening element 12 can be fastened to the support sleeve 8 by tightening the fastening clamps 15 around the support sleeve 8. Thus, the fastening element 12 is fastened to the support sleeve with a press joint which can be easily unfastened and fastened again during maintenance or replacement of the filter sector 9, or during maintenance of the shaft 1 and its parts. Fastening of the fastening clamp 15 to the support sleeve 8 may also be locked or secured by gluing.

In the embodiment shown in the figures, the fastening clamps 15 are formed of one continuous plate-like material preform in such a way that the fastening clamps 15 are in connection with each other or in contact with each other in the longitudinal direction of the support element 14 in the section directed to the front side 14a of the support element 14. The mutually continuous or integrated structure of the fastening clamps 15 thus provides a fastening clamp structure having two fastening clamps 15 that can be fastened separately from each other but that are still in connection with each other, which efficiently resists torques transmitted via the support bar 16 and the support element 14 to the fastening clamps 15 and to the fastening of the fastening clamps 15 and the support sleeve 8 and provides thus firm fastening of the fastening element 12 to the support sleeve 8. It is, however, feasible that the fastening clamps 15 fastened to the support element 14 are separate from each other. Further, it is feasible that the clamp element 13 has a single fastening clamp 15 or more than two fastening clamps.

In the embodiment shown by the figures, the fastening clamps 15 are fastened to the support element 14 by weld fastening. However, the fastening clamp 15 and the support element 14 may also be formed of one continuous plate-like material preform by bending the preform appropriately, whereby the fastening clamp 15 and the support element 14 form one continuous integrated structure, i.e. the clamp element 13.

The support bar 16 is an elongated profile structure arranged within the open or hollow structure of the support element 14. The support bar has a front side 16a directed in the same direction as the front side 14a of the support element 14, a rear side 16b or backside 16b directed in the same direction as the rear side 14b of the support element 14, and sides 16c, 16d directed in the same direction as the support element sides 14c, 14d. The support element 16 has a first end 16' directed towards the first end 14' of the support element 14, and a second end 16" directed away from the first end 14' of the support element 14. The first end 16' and the second end 16" of the support bar 16 form, at the same time, the first end and the second end of the whole fastening element 12. In practice, the first end 16' of the support bar 16 is arranged substantially at the same point as the first end of the support element 14. The front side 16a of the support bar 16 is, over at least part of its length, an at least partially open profile structure. The support bar 16 may thus be, for example, an H, U, C, G, V, Z, X, Y, A, E- or W profile, within which the support structure 10 of the filter sector 9 can be mounted in the longitudinal and/or transverse direction of the support bar 16. The filter sector 9 may be fastened to the support bar 16 by press or lock fastening between the support edge 10 of the filter sector 9 and the support bar sides 16c, 16d, which fastening may be further reinforced, if required, by for instance screw or bolt fastening between the support edge 10 and the sides 16c, 16d of the support bar 16. Further, the filter sector 9 may be fastened between support bars adjacent in the circumferential direction of the shaft 1 by a circumferential iron bar that tightens the structure from above. The support bar 16 is significantly longer than the support element 14, preferably so long that the edge or side of the filter sector 9 can be fastened to the support bar 16 over its entire length. At the second end 16" of the support bar 16 in Figures 3 and 4, there is a pin 19 to which the corner between the circumference and the side of the filter sector 9 can be locked.

The front side 14a of the support element 14 is open, whereby the support bar 16 can be easily positioned within the support element 14. The rear side 14b or backside 14b of the support element 14 is closed over at least part of the total length of the support element 14 by the first end 14' of the support element 14, i.e. starting from the end directed towards the shaft 1. The length of the closed section 14b' of the backside 14b of the support element 14 is dimensioned in such a way that the closed section 14b' of the backside 14b of the support element 14 extends from the support sleeve 8 towards the second end 14" of the support element 14 by the amount of at least three times the width of the sides 16c, 16d of the support bar 16. The closed section 14b' of the backside 14b of the support element 14 constitutes a support surface which, during the operation of the disc filter, prevents the support bar 16 from bending in the direction of the backside 16b in the section where the fastening element 12 is fastened to the support sleeve 8. However, since the length of the closed section 14b' of the backside 14b of the support element 14 is restricted in such a way that a significant portion of the length of the support bar 16 extends beyond the support element 14, the support bar 16 can, if required, yield in the circumferential direction of the disc filter, i.e. in the rotation direction of the disc filter shaft 1, where the loads directed at the filter sectors 9 during the operation of the disc filter and also in cases of damage have the greatest influence.

Further, the sides 14c or 14d of the support element 14 have support projections 20 extending towards the second end 14" of the support element 14 from that point of the support element 14 at which the closed section 14b' of the backside 14b of the support element 14 ends. When the support element 16 in inserted into the support element 14, the sides 16c, 16d of the support bar 16 become positioned against the support projections 20, whereby the support projections 20 provide support for the support bar 16 in the direction of the disc filter shaft 1. The length of the support projections 20 is selected to be at least three times the width of the side 16c, 16d of the support bar 16.

The support element 14 and the support bar 16 are fastened to each other by welding. Between the sides 14c, 14d of the support element 14 and the sides 16c, 16d of the support bar 16, spot welds 21 may be used, and between the support projections 20 of the support element 14 and the sides 16c, 16d of the support bar 16, fillet welds 22 may be used.

In the clamp element 13 shown in Figures 3, 4 and 6, the width of the sides 14c, 14d of the support element 14 is arranged to increase when one moves from the direction of the second end 14" of the support element 14 towards the first end 14' in such a way that the width of the sides 14c, 14d of the support element 14 is greater at the first end 14' of the support element 14 than at the second end 14", and particularly in that portion of the support element 14 where the fastening clamps 15 are located. In the embodiment shown in Figures 3, 4 and 6, the width of the sides 14c, 14d of the support element 14 is arranged to increase gradually before the fastening point of the fastening clamps 15 to the support element 14 when one moves from the direction of the second end 14" of the support element towards the first end 14'. As a result, the structure of the fastening element 12 gets firmer towards the fastening clamps 15. Thus, deformation of the second end 16" of the fastening element 12, which is caused by the load directed at the fastening element 12 from the filter sector 9 and is greater than at the first end 16', makes the deformation generated in the support element 14 decrease towards the fastening clamps 15, whereby the deformation at the fastening point between the support element 14 and the fastening clamps 15, and particularly at its starting point, is significantly smaller than it would be if the support element 14 were uniformly firm. The structure of the second end 14" of the support element 14, which is weaker than that of the first end 14', allows, however, both the support element 14 and the support bar 16 to bend without the support element 14, the support bar 16 or the fastening between them breaking. The clamp element 13 in Figures 7, 8 and 9 represents an embodiment of such a uniformly firm support element 14, i.e. a support element the surface area of the cross-section of which is substantially constant over the entire length of the support element.

Owing to the support effect of the support bar 16 on the filter sector 9, the disclosed fastening element 12 provides fastening that is firmer than prior art weld fastening because a great surface area is formed between the clamp element 13 of the fastening element 12 and the support sleeve 8. At the same time, however, the fastening is more flexible because there is no weld fastening between the fastening element 12 and the support sleeve 8. Both in cases where filter sectors 9 are subjected to loads during normal operation of the disc filter and in cases of damage where filter sectors 9 get damaged, the fastening element 12 is capable of yielding in such a way that the fastening element 12 and particularly the disc filter shaft 1 are prevented from suffering damage. A further advantage of the disclosed fastening element is that no extra openings that would require sealing are needed in the shaft 1 for the fastening element.

The firmness and durability of the fastening provided by the fastening element 12 is also affected by the firm and durable structure of the fastening element 12 itself, because a low stress level and low stress variation affecting the fastening element 12 have been achieved by means of the shaping of the structural parts of the fastening element 12. Partially, the firmness of the fastening element 12 has been achieved in such a way that the welded joints between its structural parts are positioned at such points in the fastening element 12 where the stress level of the structure is relatively low. Further, the fastening element 12 as an implementation separate from the shaft 1 allows the fastening element to be manufactured in such a way that the welded joints for its structure can be made in positions that are advantageous for welding, which results in firm welded joints of high quality.

In some cases, features disclosed in this application may be used as such, irrespective of other features. On the other hand, when necessary, features disclosed in this application may be combined to provide different combinations.

The drawings and the related description are only intended to illustrate the idea of the invention. The details of the invention may vary within the scope of the claims.

## Claims

1. A filter sector (9) with a fastening element (12) for fastening said filter sector (9) of a filter disc in a disc filter to a support sleeve (8) in a shaft (1) of the disc filter, **characterized in that** the fastening element (12) comprises a clamp element (13) and a support bar (16) arranged in connection with the clamp element (13), whereby the support bar (16) is fastened to the filter sector (9) of the filter disc, and the clamp element (13) is arranged to be fastened to the support sleeve (8) in the disc filter shaft (1) to fasten the filter sector (9) of the filter disc to the disc filter shaft (1).

2. A filter sector according to claim 1, **characterized in that** the clamp element (13) comprises a support element (14) the cross-section of which is an open profile structure with an open front side (14a), a backside (14b) on the side opposite to the front side (14a), and sides (14c, 14d) between the front side (14a) and the backside (14b), and inside which support element (14) part of the support element (16) is arranged; and that the clamp element (13) further comprises at least one fastening clamp (15) arranged on the front side (14a) of the support element (14) to fasten the fastening element (12) in the support sleeve (8) of the disc filter shaft (1).

3. A filter sector according to claim 1 or 2, **characterized in that** the clamp element (13) comprises two fastening clamps (15) arranged in the support element (14) at an end (14') directed towards the support sleeve (8) of the support element (14) at a distance from each other in the longitudinal direction of the support element (14).

4. A filter sector according to claim 3, **characterized in that** the fastening clamps (15) are manufactured of one continuous material preform in such a way that the fastening clamps (15) are mutually integrated.

5. A filter sector according to any one of claims 2 to 4, **characterized in that** the fastening clamp (15) or fastening clamps (15) and the support element (14) are formed of one integrated structure.

6. A filter sector according to any one of claims 2 to 5, **characterized in that** on the backside (14b) of the support element (14), there is a closed section (14b') that is arranged to extend, in the longitudinal direction of the support element (14), from the end (14') of the support element (14) to be directed towards the support sleeve (8) to the section of the support element (14) between an opposite end (14") of the support element (14) and the sup port sleeve (8) when the fastening element (12) is in place in the support sleeve (8).

7. A filter sector according to claim 6, **characterized in that** that the length of that portion of the closed section (14b') of the backside (14b) of the support element (14) that is arranged to extend from the support sleeve (8) towards the opposite end (14") of the support element (14) is at least three times the width of sides (16c, 16d) of the support bar (16).

8. A filter sector according to any one of claims 2 to 7, **characterized in that** on the sides (14c, 14d) of the support element (14), at the end (14") of the support element (14) that is directed away from the fastening clamps (15), there are support projections (20) arranged to support the support bar (16) positioned inside the support element (14).

9. A filter sector according to claim 8, **characterized in that** the length of the support projection (20) is at least three times the width of the side (16c, 16d) of the support bar (16).

10. A filter sector according to claim 8 or 9, **characterized in that** the support element (14) and the support bar (16) are fastened to each other with spot welds (21) between the sides of (14c, 14d) of the support element (14) and the sides (16c, 16d) of the support bar (16), and with fillet welds (22) between the support projections (20) of the support element (14) and the sides (16c, 16d) of the support bar (16).

11. A filter sector according to any one of claims 2 to 10, **characterized in that** the width of the sides (14c, 14d) of the support element (14) is arranged to increase gradually from the direction of the end (14") of the support element (14) directed away from the fastening clamps (15) before the fastening point between the support element (14) and the fastening clamps (15).

12. A filter sector according to any one of the preceding claims, **characterized in that** the support bar (16) is at least over part of its length an at least partially open H, U, C, G, V, Z, X, Y, A, E or W profile.

## Patentansprüche

1. Filtersektion (9) mit einem Befestigungselement (12) zum Befestigen der Filtersektion (9) einer Filterscheibe in einem Scheibenfilter an einer Stützbuchse (8) in einer Welle (1) des Scheibenfilters, **dadurch gekennzeichnet, dass** das Befestigungselement (12) ein Klemmelement (13) und eine Stützstange (16) aufweist, die in Verbindung mit dem Klemmelement (13) angeordnet ist, wodurch die Stützstange (16) an der Filtersektion (9) der Filterscheibe befestigt ist, und das Klemmelement (13) angeordnet ist, um an der Stützbuchse (8) in der Scheibenfilterwelle (1) befestigt zu werden, um die Filtersektion (9) der Filterscheibe an der Scheibenfilterwelle (1) zu befestigen.

2. Filtersektion nach Anspruch 1, **dadurch gekennzeichnet, dass** das Klemmelement (13) ein Stützelement (14) aufweist, dessen Querschnitt eine offene Profilstruktur mit einer offenen Stirnseite (14a), einer Rückseite (14b) an der Seite gegenüber der Stirnseite (14a) und Seiten (14c, 14d) zwischen der Stirnseite (14a) und der Rückseite (14b) ist, und innerhalb des Stützelements (14) ein Teil des Stützelements (16) angeordnet ist; und dass das Klemmelement (13) ferner wenigstens eine Befestigungsklemme (15) aufweist, die auf der Vorderseite (14a) des Stützelements (14) angeordnet ist, um das Befestigungselement (12) in der Stützbuchse (8) der Scheibenfilterwelle (1) zu befestigen.

3. Filtersektion nach Anspruch 1 oder 2, **dadurch gekennzeichnet, dass** das Klemmelement (13) zwei Befestigungsklemmen (15) aufweist, die in dem Stützelement (14) an einem Ende (14') angeordnet sind, welches in Richtung der Stützbuchse (8) des Stützelements (14) in einem Abstand voneinander in der Längsrichtung des Stützelements (14) ausgerichtet ist.

4. Filtersektion nach Anspruch 3, **dadurch gekennzeichnet, dass** die Befestigungsklemmen (15) aus einer durchgehenden Material-Vorform derart hergestellt sind, dass die Befestigungsklemmen (15) gemeinsam integriert sind.

5. Filtersektion nach einem der Ansprüche 2 bis 4, **dadurch gekennzeichnet, dass** die Befestigungsklemme (15) oder Befestigungsklemmen (15) und das Stützelement (14) aus einer integrierten Struktur gebildet sind.

6. Filtersektion nach einem der Ansprüche 2 bis 5, **dadurch gekennzeichnet, dass** auf der Rückseite (14b) des Stützelements (14) ein geschlossener Abschnitt (14b') vorgesehen ist, der angeordnet ist, sich von dem Ende (14') des Stützelements (14) in der Längsrichtung des Stützelements (14) zu erstrecken, um in Richtung der Stützbuchse (8) zu dem Abschnitt des Stützelements (14) zwischen einem gegenüberliegenden Ende (14") des Stützelements (14) und der Stützbuchse (8) ausgerichtet zu werden, wenn das Befestigungselement (12) an Ort und Stelle in der Stützbuchse (8) ist.

7. Filtersektion nach Anspruch 6, **dadurch gekennzeichnet, dass** die Länge desjenigen Teils des geschlossenen Abschnitts (14b') der Rückseite (14b) des Stützelements (14), welches sich von der Stützbuchse (8) zum gegenüberliegenden Ende (14") des Stützelements (14) erstreckt, mindestens dem Dreifachen der Breite der Seiten (16c, 16d) der Stützstange (16) entspricht.

8. Filtersektion nach einem der Ansprüche 2 bis 7, **dadurch gekennzeichnet, dass** auf den Seiten (14c, 14d) des Stützelements (14), an dem von den Befestigungsklemmen (15) weg gerichteten Ende (14") des Stützelements (14), Stützvorsprünge (20) vorgesehen sind, die angeordnet sind, um die Stützstange (16) innerhalb des Stützelements (14) positioniert zu halten.

9. Filtersektion nach Anspruch 8, **dadurch gekennzeichnet, dass** die Länge des Stützvorsprungs (20) mindestens dem Dreifachen der Breite der Seite (16c, 16d) der Stützstange (16) entspricht.

10. Filtersektion nach Anspruch 8 oder 9, **dadurch gekennzeichnet, dass** das Stützelement (14) und die Stützstange (16) miteinander durch Punktschweißungen (21) zwischen den Seiten (14c, 14d) des Stützelements (14) und den Seiten (16c, 16d) der Stützstange (16) befestigt sind, und mit Kehlnähten (22) zwischen den Stützvorsprüngen (20) des Stützelements (14) und den Seiten (16c, 16d) der Stützstange (16).

11. Filtersektion nach einem der Ansprüche 2 bis 10, **dadurch gekennzeichnet, dass** die Breite der Seiten (14c, 14d) des Stützelements (14) angeordnet ist, um sich aus der Richtung des Endes (14") des Stützelements (14), welches von den Befestigungsklammern (15) vor dem Befestigungspunkt zwischen dem Stützelement (14) und den Befestigungsklemmen (15) weggerichtet ist, allmählich zu erweitern.

12. Filtersektion nach einem der vorhergehenden Ansprüche, **dadurch gekennzeichnet, dass** die Stützstange (16) zumindest über einen Teil ihrer Länge ein zumindest teilweise offenes H, U, C, G, V, Z, X, Y, A, E oder W-Profil ist.

## Revendications

1. Un secteur formant filtre (9) avec un élément de fixation (12) pour fixer ledit secteur formant filtre (9) d'un disque formant filtre dans un filtre en disque à une douille de support (8) dans un arbre (1) du filtre en disque, **caractérisé par** en ce que l'élément de fixation (12) comprend un élément de serrage (13) et une barre de support (16) agencée en liaison avec l'élément de serrage (13), la barre de support (16) étant fixée sur le secteur formant filtre (9) du disque formant filtre, et l'élément de serrage (13) étant agencé pour être fixé à la douille de support (8) dans l'arbre (1) du filtre en disque pour fixer le secteur formant filtre (9) du disque formant filtre à l'arbre du filtre en disque (1).

2. Un secteur formant filtre selon la revendication 1, **caractérisé en ce que** l'élément de serrage (13) comprend un élément de support (14), dont la-section transversale est une structure profilée ouverte ayant une face avant ouverte (14a), une face arrière (14b) sur le côté opposé à la face avant (14a) et des côtés (14c, 14d) entre la face avant (14a) et la face arrière (14b), et à l'intérieur duquel élément de support (14) une partie de l'élément de support (16) est agencée ; et **en ce que** l'élément de serrage (13) comprend en outre au moins un pince de fixation (15) agencée sur la face avant (14a) de l'élément de support (14) pour fixer l'élément de fixation (12) dans la douille de support (8) de l'arbre de filtre en disque (1).

3. Un secteur formant filtre selon la revendication 1 ou la revendication 2, **caractérisé en ce que** l'élément de serrage (13) comprend deux pinces de fixation (15) agencées dans l'élément de support (14) à une extrémité (14') dirigée vers la douille de support (8) de l'élément de support (14) à distance l'une de l'autre dans la direction longitudinale de l'élément de support (14).

4. Un secteur formant filtre selon la revendication 3, **caractérisé en ce que** les pinces de fixation (15) sont fabriquées à partir d'une préforme de matériau continu, d'une manière telle que les pinces de fixation (15) sont mutuellement d'un seul tenant.

5. Un secteur formant filtre selon l'une quelconque des revendications 2 à 4, **caractérisé en ce que** la pince de fixation (15) ou les pinces de fixation (15) et l'élément de support (14) sont formés d'une structure en un seul tenant.

6. Un secteur formant filtre selon l'une quelconque des revendications 2 à 5, **caractérisé en ce que** sur la face arrière (14b) de l'élément de support (14), il y a une portion fermée (14b') qui est agencée de manière à s'étendre, dans la direction longitudinale de l'élément de support (14), depuis l'extrémité (14') de l'élément de support (14) destinée à être dirigée vers la douille de support (8) vers la portion de l'élément de support (14) située entre une extrémité opposée (14") de l'élément de support (14) et la douille de support (8) lorsque l'élément de fixation (12) est en place dans la douille de support (8).

7. Un secteur formant filtre selon la revendication 6, **caractérisé en ce que** la longueur de cette partie de la section fermée (14b') du côté arrière (14b) de l'élément de support (14), qui est agencé de manière à s'étendre depuis la douille de support (8) en direction de l'extrémité opposée (14") de l'élément de support (14), est égale à au moins trois fois la largeur des côtés (16c, 16d) de la barre de support (16).

8. Un secteur formant filtre selon l'une quelconque des revendications 2 à 7, **caractérisé en ce que** sur les côtés (14c, 14d) de l'élément de support (14), à l'extrémité (14") de l'élément de support (14) qui est dirigé à l'opposé des pinces de fixation (15), il y a des saillies de support (20) agencées pour supporter la barre de support (16) positionnée à l'intérieur de l'élément de support (14).

9. Un secteur formant filtre selon la revendication 8, **caractérisé en ce que** la longueur de la saillie de support (20) est égale à au moins trois fois la largeur de la face (16c, 16d) de la barre de support (16).

10. Un secteur formant filtre selon la revendication 8 ou la revendication 9, **caractérisé en ce que** l'élément de support (14) et la barre de support (16) sont fixés l'un à l'autre par des soudures par points (21) entre les côtés (14c, 14d) de l'élément de support (14) et les côtés (16c, 16d) de la barre de support (16), et par des soudures d'angle (22) entre les saillies de support (20) de l'élément de support (14) et les côtés (16c, 16d) de la barre de support (16).

11. Un secteur formant filtre selon l'une quelconque des revendications 2 à 10, **caractérisé en ce que** la largeur des côtés (14c, 14d) de l'élément de support (14) est agencée de façon augmenter progressivement dans la direction de l'extrémité (14") de l'élément de support (14) dirigé à l'opposé des pinces de fixation (15), avant le point de fixation entre l'élément de support (14) et les pinces de fixation (15).

12. Un secteur formant filtre selon l'une quelconque des revendications précédentes, **caractérisé en ce que** la barre de support (16) est, au moins sur une partie de sa longueur, selon un profil au moins partiellement ouvert en H, U, C, G, V, Z, X, Y, A, E ou W.
